# EUROPÄISCHE PATENTSCHRIFT

(11) **EP 2 842 841 B1**
(45) Veröffentlichungstag und Bekanntmachung des Hinweises auf die Patenterteilung: **02.10.2019**
(21) Anmeldenummer: 14181045.7
(22) Anmeldetag: 14.08.2014
(51) Int. Cl.: B62D 33/02, B60J 5/06

(54) **Seitenabdeckung eines Nutzfahrzeugaufbaus**
Side structure and tarpauling for a commercial vehicle
Structure et bâchage latérale d'un véhicule utilitaire

(30) Priorität: 15.08.2013 DE 102013108858
(43) Veröffentlichungstag der Anmeldung: 04.03.2015
(73) Patentinhaber: F. Hesterberg & Söhne GmbH & Co. KG, 58256 Ennepetal (DE)
(72) Erfinder: Tiedtke, Henning, 58256 Ennepetal (DE)
(74) Vertreter: Bungartz Christophersen Partnerschaft mbB Patentanwälte

(56) Entgegenhaltungen:
- EP-A1- 1 407 912
- EP-A1- 1 847 447
- EP-A1- 2 330 020
- EP-A1- 2 353 904
- DE-A1- 4 425 426

## Beschreibung

Die Erfindung betrifft eine Seitenabdeckung eines Nutzfahrzeugaufbaus, bestehend aus einer in Höhe der Dachkonstruktion des Fahrzeugaufbaus aufgehängten und in Fahrzeuglängsrichtung zusammenschiebbaren Seitenplane und mindestens einer an der Innenseite der Seitenplane angeordneten und mit dieser gemeinsam in Fahrzeuglängsrichtung verschieblichen Runge, die einen vertikal langgestreckten, ein- oder mehrteiligen Rungengrundkörper aufweist, an ihrem oberen Ende mit einem Rollapparat zur Führung der Runge längs der Dachkonstruktion versehen ist, und mit ihrem unteren Ende gegen einen fahrzeugfesten Rungenhalter verriegelbar ist, wobei Bestandteil der Runge ein zu dem Rungengrundkörper hin verschwenkbar ausgebildeter Spannhebel ist.

Eine Seitenabdeckung mit diesen Merkmalen, bei der die Seitenplane mit der dahinter angeordneten Runge verbunden ist und somit die Runge, nachdem sie entriegelt wurde, nur gemeinsam mit der Seitenplane längs des Fahrzeugaufbaus verschoben werden kann, ist aus der EP 2 330 020 A1 bekannt. Um bei geschlossenem Fahrzeugaufbau die Seitenplane straff zu halten, ist sie nicht nur über mehrere Schlaufen mit dem Rungengrundkörper verbunden, sondern auch über oberhalb der Ladefläche am Rungengrundkörper befestigte Druckelemente. Die Druckelemente enthalten eine Feder, die einen nach unten gerichteten Druck auf den unteren Abschlussrand der Plane ausübt, so dass diese vertikal gestrafft wird. Da die Druckelemente die nach unten gerichtete Spannkraft auch bei entriegelter Runge ausüben, kann es beim Öffnen und Schließen der Seitenplane, die mit ihrem oberen Abschlussrand längs der Dachkonstruktion des Fahrzeugaufbaus aufgehängt ist, zu erhöhten Reibungskräften kommen, so dass für das Zusammenschieben und damit Raffen der Seitenplane und ebenso für das Schließen relativ große Horizontalkräfte ausgeübt werden müssen.

Aus der EP 2 353 904 A1 ist eine vertikal straffbare Seitenabdeckung eines Nutzfahrzeugaufbaus mit einer Runge aus zwei Rungenabschnitten bekannt, die durch eine Feder voneinander weg gespreizt sind. Der untere Rungenabschnitt ist mit einem Zapfen zur Verriegelung in einem Profil am Ladeboden versehen. Ein Gehäuse einer Planenspanneinrichtung ist sowohl mit der Seitenplane, als auch mit dem unteren Rungenabschnitt verbunden. In dem Gehäuse ist auf einer Achse ein Spannhebel gelagert.

Von diesem führt ein Spanngurt, der mit dem unteren Rand der Seitenplane verbunden sein kann, bis zu einem Haken, der sich unter dem Ladebodenprofil einhängen lässt. Durch Spannen des Hebels wird dessen Gehäuse und damit auch die Plane nach unten gezogen und gestrafft.

Der Erfindung liegt die Aufgabe zugrunde, bei einer Seitenabdeckung mit vertikaler Straffung der Seitenplane das Bedienen der durch seitliches Raffen zusammenschiebbaren Seitenplane zu erleichtern.

Zur Lösung dieser Aufgabe wird eine Seitenabdeckung eines Nutzfahrzeugaufbaus mit den Merkmalen des Patentanspruchs 1 vorgeschlagen.

Bei einer solchen Seitenabdeckung wird eine vertikale Spannkraft auf die Seitenplane nur und erst mit der Verriegelung der Runge an dem fahrzeugfesten Rungenhalter ausgeübt. Solange hingegen die Runge zum Öffnen der Seitenabdeckung vom Rungenhalter gelöst ist, werden keine zusätzlichen vertikalen Kräfte auf die Seitenplane ausgeübt, so dass diese während des Zusammenschiebens und damit Raffens und ebenso während des Schließens widerstandsarm gleiten kann.

Die Runge ist zu ihrer lösbaren Verriegelung an dem Rungenhalter mit einer Hebelanordnung versehen, wobei Bestandteil der Hebelanordnung ein gegenüber dem Rungenhalter abstützbarer Kniehebel ist, der zur Verriegelung der Runge zu dem Rungengrundkörper hin verschwenkbar ausgebildet ist. Vorzugsweise ist der Kniehebel mit seinem unteren Ende gegenüber dem Rungenhalter abstützbar, und ist das untere Ende des Kniehebels an dem Rungengrundkörper längsgeführt.

Mit dem Ziel einer günstigen Krafteinleitung wird vorgeschlagen, dass sich der Spannhebel aus zwei zueinander parallel geführten Teilhebeln zusammensetzt, die in Fahrzeuglängsrichtung vor bzw. hinter dem Rungengrundkörper angeordnet sind. Dies führt zu einer günstigen Verteilung der nach unten gerichteten Kraft zum vertikalen Spannen der Seitenplane, so dass deren unterer Rand, auch ohne zusätzliche Befestigungsmittel, dicht an den Fahrzeugseiten anliegt. Zumindest auf einige der üblicherweise für das vertikale Straffen von Seitenplanen verwendeten Zugelemente kann auf diese Weise verzichtet werden.

Mit einer weiteren Ausgestaltung wird vorgeschlagen, dass Kniehebel und Spannhebel bei verriegelter Runge parallel zueinander senkrecht stehen, wohingegen bei entriegelter Runge der Kniehebel steiler steht, als der Spannhebel. Dies führt zu einer besonders platzsparenden, da zumindest teilweise in den Profilquerschnitt des Rungengrundkörpers integrierbaren Bauweise.

Eine weitere Ausgestaltung ist gekennzeichnet durch einen zweiten Kniehebel der Hebelanordnung, der über ein erstes Schwenkgelenk zu dem Rungengrundkörper hin verschwenkbar ausgebildet ist, und über ein zweites Schwenkgelenk mit dem ersten Kniehebel gekoppelt ist.

Zur Übertragung der für die Verriegelung der Runge an dem Rungenhalter erforderlichen Kräfte ist von Vorteil, wenn der zweite Kniehebel als eine flächige Druckplatte gestaltet ist, welche bei verriegelter Runge einen vertikalen Längsabschnitt des Rungengrundkörpers auf dessen gesamter Breite nach außen hin abdeckt.

Alternativ besteht aber auch die Möglichkeit, die zur Verriegelung der Runge erforderlichen Handkräfte unmittelbar am Spannhebel auszuüben, indem der Spannhebel als eine flächige Druckplatte gestaltet ist, welche bei verriegelter Runge einen vertikalen Längsabschnitt des Rungengrundkörpers auf dessen gesamter Breite nach außen hin abdeckt.

Ferner wird vorgeschlagen, dass an der Druckplatte und / oder an einem der beiden Kniehebel ein von Hand greifbares Zugelement, z. B. eine Schlaufe, befestigt ist. Das Zugelement ist vorzugsweise durch eine Öffnung in der Seitenplane hindurch bis auf die Außenseite der Seitenplane geführt, und ist dort, ohne die Seitenplane entfernen zu müssen, von Hand greifbar, um so die dahinter angeordnete Druckplatte von Hand nach außen zu ziehen und so die Runge zu entriegeln.

Schließlich ist eine weitere Ausgestaltung durch einen in dem Rungengrundkörper angeordneten Sicherungsmechanismus zum Sperren der Rungenverriegelung gekennzeichnet. Bestandteil des Sicherungsmechanismus ist ein am unteren Ende des Rungengrundkörpers beweglich gelagertes, und dort von Hand greifbares Entsperrelement. Durch die Anordnung des Entsperrelements am unteren und vorzugsweise am äußersten unteren Ende des Rungengrundkörpers ist dieses von Hand erreichbar, ohne hierfür eine entsprechende Öffnung in der Seitenplane vorsehen zu müssen.

Weitere Einzelheiten sowie Vorteile ergeben sich aus der nachfolgenden Beschreibung eines Ausführungsbeispiels, wobei auf die Zeichnungen Bezug genommen wird. Darin zeigen:
- Figur 1: in Draufsicht ein Nutzfahrzeug, dessen geschlossener Nutzfahrzeugaufbau horizontal geschnitten dargestellt ist;
- Figur 2: in perspektivischer Darstellung einen Teilbereich des Ladebodens des Nutzfahrzeugaufbaus mit einem seitlich am Ladeboden befestigten Rungenhalter, der der lösbaren Befestigung einer Runge dient;
- Figur 3: in derselben Perspektive den unteren Teil der Runge, wobei diese in entriegeltem Zustand wiedergegeben ist;
- Figur 4: die Gegenstände nach Figur 3 bei verriegelter Runge;
- Figur 5: einen vertikalen Schnitt durch die Runge einschließlich der Dachkonstruktion des Fahrzeugaufbaus und einer Seitenplane, und zwar bei entriegelter Runge, und
- Figur 6: in einem weiteren vertikalen Schnitt Einzelheiten im unteren Teil der Runge nach Figur 5.

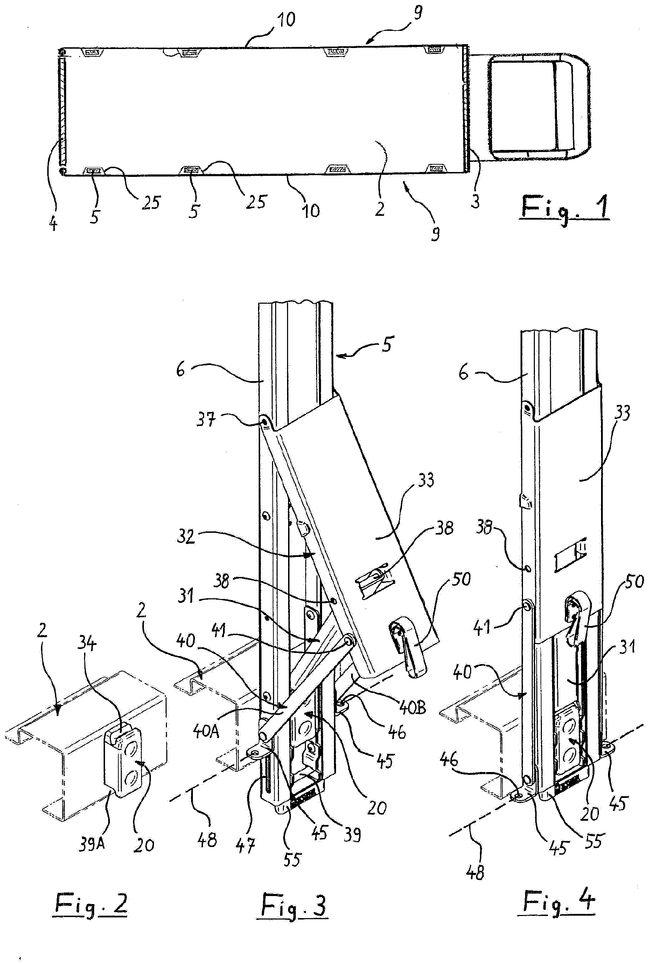

Zur Erläuterung der Erfindungsgemäßen Seitenabdeckung für einen Nutzfahrzeugaufbau zeigt Figur 1 ein Nutzfahrzeug in Gestalt eines Sattelaufliegers. Dessen Aufbau besteht aus einem oberhalb des Fahrzeugchassis angeordneten, bordwandfreien Ladeboden 2, einer in Figur 1 nicht dargestellten Dachkonstruktion 15, einer Vorderwand 3, einer Rückwand 4 sowie einer linken und einer rechten Seitenabdeckung 9. Jede Seitenabdeckung 9 setzt sich aus mehreren die Dachkonstruktion 15 stützenden Rungen 5 sowie mindestens einer Seitenplane 10 zusammen. Die Seitenplane 10 besteht aus einem biegsamen Material, z. B. einem beschichteten Gewebe, und erstreckt sich über die zu öffnende Länge des Nutzfahrzeugaufbaus, vorzugsweise über die ganze Länge des Nutzfahrzeugaufbaus.

Sowohl die Rungen 5 als auch die Seitenplane 10 erstrecken sich auch über die Höhe des Nutzfahrzeugaufbaus. Sie erstrecken sich insbesondere von der Höhe des Ladebodens 2 aus bis zu der von der Vorderwand 3, der Rückwand 4 und den Rungen 5 getragenen Dachkonstruktion.

Jede Runge 5, soweit es sich nicht um eine der vier Eckrungen handelt, besteht in üblicher Weise aus einem langgestreckten, vorzugsweise als Profil ausgebildeten Rungengrundkörper 6 mit einem das obere Ende der Runge bildeten Rollapparat 12. An dem Rollapparat 12 sind zwei oder mehr Rollen 13 frei drehbar gelagert, die in einer Schiene 14 in Höhe der Dachkonstruktion 15 laufen. Mittels des Rollapparats 12 geführt lässt sich die Runge 5 daher, in der Schiene 14 eingehängt, in Fahrzeuglängsrichtung verschieben.

Parallel zu der Schiene 14 ist in Höhe der Dachkonstruktion 15 eine weitere Schiene 16 angeordnet, in welche die in den Figuren 3, 4 und 5 gestrichelt wiedergegebene Seitenplane 10 mit ihrem obere Rand 17 eingehängt ist, und längs welcher der obere Rand 17 beim Öffnen und Schließen der Seitenplane 10 geführt ist.

Das untere Ende jeder Runge 5 wird, soweit kein Beladen oder Entladen stattfindet, gegenüber dem Ladeboden 2 des Nutzfahrzeugaufbaus verriegelt. Zur formschlüssigen Verriegelung der Runge ist der Ladeboden bzw. das Seitenprofil des Ladebodens mit einem außen daran befestigten Rungenhalter 20 versehen.

Zur Betätigung einer in die Runge 5 integrierten Rungenverriegelung ist an der Runge ein Betätigungsgriff angeordnet. Dieser erlaubt mittels eines als Hebelanordnung gestalteten Mechanismus das formschlüssige Verbinden und damit Verriegeln der Runge mit bzw. an dem Rungenhalter 20, und umgekehrt das Trennen dieser Teile voneinander. In entriegeltem Zustand lässt sich die dann nur noch an ihrem Rollapparat 12 hängende Runge 5 etwas nach außen von dem Ladeboden 2 und damit von dem Rungenhalter 20 wegschwenken, so dass dann die Runge, an ihrem Rollapparat 12 hängend, in Fahrzeuglängsrichtung verschoben werden kann, um die Seitenabdeckung des Fahrzeugs zum Be- und Entladen großflächig zu öffnen. Gleiches gilt für die anderen Rungen, mit Ausnahme der vier Eckrungen.

Zur Erzielung der eingangs dargestellten Vorteile ist die Seitenplane 10 mit jeder auf dieser Fahrzeugseite längsverschieblichen Runge 5 in horizontaler Richtung verbunden, wodurch es bei einem Zusammenschieben, d. h. bei einem Raffen der betreffenden Seitenplane 10 zum vorderen oder zum hinteren Ende des Fahrzeugaufbaus hin zu einem gleichzeitigen Mitnehmen der Rungen 5 kommt, und umgekehrt bei einem Verfahren der Rungen 5 in Fahrzeuglängsrichtung zu einem gleichzeitigen Mitnehmen der Plane 10.

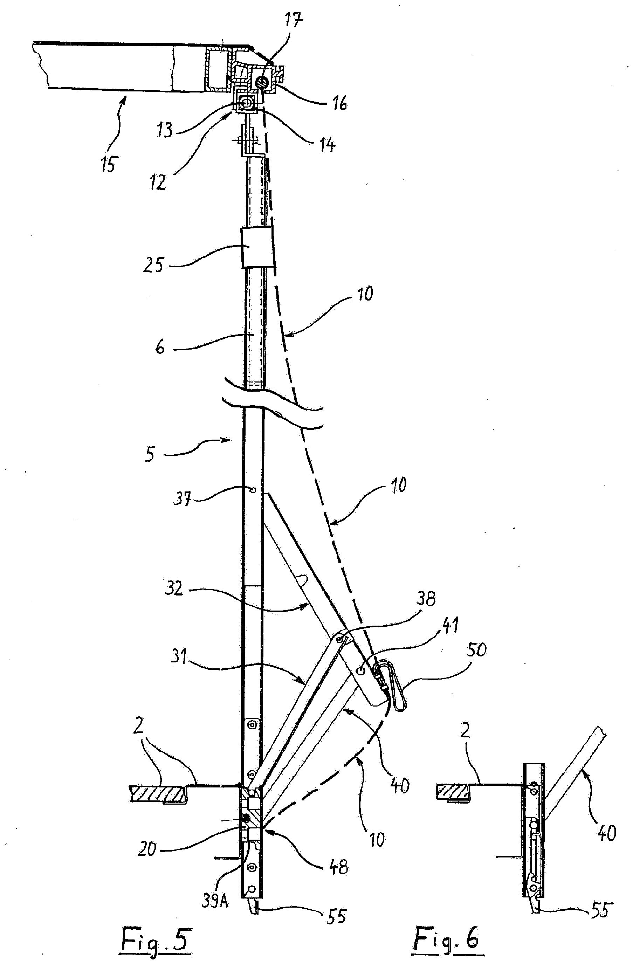

Um die Plane 10 in horizontaler Richtung, aber auch nur in horizontaler Richtung, mit der innen dahinter angeordneten Runge 5 zu verbinden, besteht zunächst nahe des oberen Planenrandes eine horizontale Verbindung zwischen der Plane 10 und der Runge 5. Über die Höhe und damit Länge der Runge 5 sind zudem weitere horizontale Verbindungsmittel 25 vorhanden (Fig. 5). Bei den Verbindungsmitteln 25 handelt es sich um an der Planeninnenseite befestigte Gurte oder Schlaufen, die zumindest um die Vorder-, Innen- und Rückseite des Rungengrundkörpers 6 geführt sind. Jedes dieser Verbindungsmittel bildet gemeinsam mit der Planeninnenseite eine nach unten und oben offene Schlaufe, durch die der Rungengrundkörper 6 hindurchführt. Die Befestigung dieser Schlaufen 25 oder Gurte an der Plane 10 kann z. B. durch Nieten erfolgen oder durch Vernähen der Schlaufen oder Gurte mit der Plane. Ferner ist es möglich, jedes Band 25 aus zwei lösbaren Bandhälften zusammenzusetzen, um so die Schlaufe, etwa für einen Austausch einer schadhaften Seitenplane, vollständig öffnen zu können. Die Verbindungen 25 können über die Höhe der Runge mehrfach vorhanden sein.

Die Hebelanordnung zum Befestigen der Runge am Rungenhalter setzt sich im Wesentlichen aus einem ersten Kniehebel 31 und einem zweiten Kniehebel 32 zusammen, die in einem Schwenkgelenk 38 mit horizontaler Schwenkachse miteinander verbunden sind. Werden die Kniehebel 31, 32 aus ihrer zueinander angewinkelten Ausrichtung (Fig. 3) in ihre gestreckte Ausrichtung (Fig. 4) bewegt, kommt es zu einem Anheben des Rungengrundkörpers 6 und damit des Fahrzeugdachs, und zugleich zu einer Verriegelung des Rungengrundkörpers an dem fahrzeugfesten Rungenhalter 20.

Grundsätzlich kann die Hebelanordnung beliebig ausgestaltet sein. Bei dem hier beschriebenen Ausführungsbeispiel stützt sich der erste Kniehebel 31 mit seinem unteren Ende von oben her an dem Rungenhalter 20 ab, wohingegen das obere Ende des ersten Kniehebels 31 über das Schwenkgelenk 38 mit dem zweiten Kniehebel 32 verbunden ist.

Um die Runge vollständig vom Rungenhalter 20 lösen zu können, ist das untere Ende des Kniehebels 31 von oben her in eine Mulde 34 an dem Rungenhalter 20 einsetzbar, ohne darin unlösbar und dauerhaft befestigt zu sein. Vorzugsweise ist dieses untere Ende des Kniehebels 31 nach Art eines Bolzens gestaltet, der sich parallel zu dem Schwenkgelenk 38 erstreckt. Der Bolzen ist an dem Rungengrundkörper 6 vertikal geführt. Dadurch wird eine Längsführung des unteren Endes des Kniehebels 31 in Längsrichtung der Runge am Rungengrundkörper 6 erzielt.

Der zweite, bei dem hier beschriebenen Ausführungsbeispiel als eine Druckplatte 33 gestaltete Kniehebel 32 ist über ein an seinem oberen Ende ausgebildetes Schwenkgelenk 37 zu dem Rungengrundkörper 6 hin schwenkbar, und zugleich über das bereits erwähnte Schwenkgelenk 38 mit dem ersten Kniehebel 31 gekoppelt. Bei verriegelter Runge, wie dies in Fig. 4 dargestellt ist, deckt der zweite Kniehebel 32 aufgrund seiner Gestaltung als flächige Druckplatte 33 einen vertikalen Längsabschnitt des Rungengrundkörpers 6 auf dessen gesamter Breite nach außen hin ab.

Für einen verbesserten Formschluss bei verriegelter Runge ist der z. B. aus zwei zueinander parallelen Profilen zusammengesetzte Rungengrundkörper 6 an seinem untersten Ende mit einem Quersteg 39 versehen. Beim Anheben der Runge mittels der aus den Kniehebeln 31, 32 gebildeten Hebelanordnung gelangt der Quersteg 39 von unten her in eine entsprechende Mulde 39A (Fig. 2) des Rungenhalters 20. Ergebnis ist, zusammen mit dem Eingriff des ersten Kniehebels 31 in die Mulde 34 an der Oberseite des Rungenhalters 20, ein doppelter Formschluss zwischen Runge 5 und Rungenhalter 20.

Weiterer Bestandteil der Runge ist ein zu dem Rungengrundkörper 6 hin verschwenkbar ausgebildeter Spannhebel 40, der sich näherungsweise parallel zu dem Kniehebel 31 erstreckt. Das obere Ende des Spannhebels 40 ist über ein Schwenkgelenk 41 mit horizontaler, sich in Fahrzeuglängsrichtung erstreckender Schwenkachse mit dem Kniehebel 32 gekoppelt. Dieses Schwenkgelenk 41 kann zwar mit dem Schwenkgelenk 38 zusammenfallen. Bevorzugt wird jedoch, wie dargestellt, eine getrennte Anordnung der Schwenkgelenke 41, 38 an dem Kniehebel 32.

Die Fig. 3 zeigt, dass der Spannhebel 40 zwar näherungsweise, aber nicht exakt parallel zu dem Kniehebel 31 verläuft. Vielmehr steht, bei entriegelter Runge (Fig. 3) der Kniehebel 31 steiler, als der Spannhebel 40. Dies hat zur Folge, dass sich beim Schließen der Runge und in Bezug auf den Rungengrundkörper 6 das untere Ende des Spannhebels 40 und damit der Rand 48 der Plane stärker vertikal absenkt, als das auf dem Rungenhalter 20 sich abstützende, untere Ende des Kniehebels 31. Es kommt daher zu einem vertikalen Straffen der Seitenplane 10. Bei verriegelter Runge (Fig. 4) stehen Spannhebel 40 und Kniehebel 31 beide senkrecht und damit parallel zur Runge 5, was zu einer platzsparenden Anordnung führt.

Am unteren Ende des Spannhebels 40 ist dieser mit einer Öse 46 versehen, an der der untere Rand 48 der Plane 10 befestigt ist (Fig. 3, Fig. 4). Die Öse 46 befindet sich an einer Befestigungslasche 45, die, vorzugsweise gelenkig, mit dem Spannhebel 40 verbunden ist. Für ein ausschließlich vertikales Strecken des unteren Randes 48 der Plane ist die Befestigungslasche 45 oder das untere Ende des Spannhebels 40 an einer Führung 47 an dem Rungengrundkörper 6 längsgeführt. Die Führung 47 ist hier als Langloch ausgebildet.

Durch den zusätzlichen Spannhebel 40 kommt es beim Verriegeln der Runge zu einem vertikalen Strecken der Seitenplane 10 infolge eines von oben her auf den unteren Planenrand 48 ausgeübten Drucks. Dieser Druck und damit eine Spannkraft auf die Plane wird aber nur und erst mit der Verriegelung der Runge 5 an dem Rungenhalter 20 ausgeübt. Dieser Zustand ist in Fig. 4 wiedergegeben. Ist hingegen die Runge gemäß Fig. 3 entriegelt, erfolgt kein vertikales Straffen der Seitenplane, so dass diese während des Zusammenschiebens und damit Raffens und ebenso während des Schließens widerstandsarm entlang der Dachkonstruktion des Nutzfahrzeugaufbaus gleiten kann.

Zum Entriegeln der Runge ist an dem Kniehebel 32 ein von Hand greifbares Zugelement in Gestalt einer Schlaufe 50 befestigt. Die Schlaufe 50 ist vorzugsweise durch eine Öffnung in der Seitenplane hindurch bis auf die Außenseite der Seitenplane geführt und ist dort, ohne die Seitenplane entfernen zu müssen, gut von Hand greifbar, um den dahinter angeordneten Kniehebel 32 zur Entriegelung der Runge von Hand nach außen zu ziehen.

Von Vorteil ist es, dass sich der Spannhebel 40 aus zwei zueinander parallel geführten Teilhebeln 40A, 40B zusammensetzt, die in Fahrzeuglängsrichtung vor bzw. hinter dem Rungengrundkörper 6 angeordnet sind. Am unteren Ende der Teilhebel 40A, 40B befinden sich die Ösen 46, an denen die Seitenplane nahe ihres unteren Randes 48 befestigt ist. Die Bauart mit zwei zueinander parallelen Teilhebeln 40A, 40B führt zu einer günstigen Aufteilung der nach unten gerichteten Kraft zum Spannen der Seitenplane. Der untere Rand 48 der Plane legt sich, auch ohne zusätzliche Befestigungsmittel, nah und vorzugsweise dicht an die Fahrzeugseite an. Daher kann zumindest auf einige der üblicherweise für das vertikale Strecken von Seitenplanen verwendeten Spannelemente verzichtet werden.

Gemäß Fig. 3 kann die untere Führung 47 der Spannhebel 40A, 40B als in den Profilen des Rungengrundkörpers 6 ausgebildetes Langloch gestaltet sein.

Zur Verhinderung eines versehentlichen Entsperrens der Runge, etwa aufgrund starker Erschütterungen des Fahrzeugs, ist in dem Rungengrundkörper 6 ein Sicherungsmechanismus zum Sperren der Rungenverriegelung angeordnet. Bestandteil des Sicherungsmechanismus ist ein am unteren Ende des Rungengrundkörpers 6 beweglich gelagertes, und dort von Hand greifbares Entsperrelement 55. Das Entsperrelement 55 befindet sich in Höhe des unteren Planenrandes 48, wodurch es auch bei gestreckter Seitenplane 10 noch gut greifbar ist, um so die Hebelanordnung zu entsichern.

Bei dem hier beschriebenen Ausführungsbeispiel dient als flächige Druckplatte 33 der zweite Kniehebel 32. Alternativ bestehen, bei anderer Gestaltung der Hebelanordnung, auch die Möglichkeiten, den ersten Kniehebel 31 als flächige Druckplatte auszubilden, oder den Spannhebel 40 als flächige Druckplatte auszubilden. Entscheidend ist allein, dass an dem betreffenden Hebel eine ausreichend große Fläche zur Verfügung steht, auf die einschließlich der dazwischen angeordneten Plane 10 von außen her Druck ausgeübt werden kann, um die Hebelanordnung zu schließen.

### Bezugszeichenliste

- 2: Ladeboden
- 3: Vorderwand
- 4: Rückwand
- 5: Runge
- 6: Rungengrundkörper
- 9: Seitenabdeckung
- 10: Plane, Seitenplane
- 12: Rollapparat
- 13: Rolle
- 14: Schiene
- 15: Dachkonstruktion
- 16: Schiene
- 17: oberer Rand der Plane
- 20: Rungenhalter
- 25: Verbindungsmittel (Schlaufe, Gurt)
- 31: erster Kniehebel
- 32: zweiter Kniehebel
- 33: Druckplatte
- 34: Mulde
- 37: Schwenkgelenk
- 38: Schwenkgelenk
- 39: Quersteg
- 39A: Mulde
- 40: Spannhebel
- 40A: Teilhebel
- 40B: Teilhebel
- 41: Schwenkgelenk
- 45: Befestigungslasche
- 46: Öse
- 47: Führung
- 48: unterer Rand der Plane
- 50: Zugelement, Schlaufe
- 55: Entsperrelement

## Patentansprüche

1. Seitenabdeckung eines Nutzfahrzeugaufbaus, bestehend aus einer in Höhe der Dachkonstruktion (15) des Fahrzeugaufbaus aufgehängten und in Fahrzeuglängsrichtung zusammenschiebbaren Seitenplane (10) und mindestens einer an der Innenseite der Seitenplane (10) angeordneten und mit dieser gemeinsam in Fahrzeuglängsrichtung verschieblichen Runge (5), die einen vertikal langgestreckten, ein- oder mehrteiligen Rungengrundkörper (6) aufweist, an ihrem oberen Ende mit einem Rollapparat (12) zur Führung der Runge (5) längs der Dachkonstruktion (15) versehen ist, und mit ihrem unteren Ende gegen einen fahrzeugfesten Rungenhalter (20) verriegelbar ist, wobei Bestandteil der Runge (5) ein zu dem Rungengrundkörper (6) hin verschwenkbar ausgebildeter Spannhebel (40) ist, **dadurch gekennzeichnet, dass** das untere Ende des Spannhebels (40)
- an einer Führung (47) an dem Rungengrundkörper (6) längsgeführt
- und mit der Seitenplane (10) im Bereich deren unteren Randes (48) verbunden
ist, dass die Runge (5) zu ihrer lösbaren Verriegelung an dem Rungenhalter (20) mit einer Hebelanordnung versehen ist, und dass Bestandteil der Hebelanordnung ein gegenüber dem Rungenhalter (20) abstützbarer Kniehebel (31) ist, der zur Verriegelung der Runge (5) zu dem Rungengrundkörper (6) hin verschwenkbar ausgebildet ist.

2. Seitenabdeckung nach Anspruch 1, **dadurch gekennzeichnet, dass** für die gemeinsame Verschieblichkeit von Runge und Seitenplane Verbindungsmittel (25) vorhanden sind, welche die Seitenplane (10) in horizontaler Richtung mit der an ihrer Innenseite angeordneten Runge (5) verbinden.

3. Seitenabdeckung nach Anspruch 2, **dadurch gekennzeichnet, dass** die Verbindungsmittel (25) um die Runge (5) geführte Gurte oder Schlaufen sind, die an der Innenseite der Plane (10) befestigt sind.

4. Seitenabdeckung nach einem der Ansprüche 1 bis 3, **dadurch gekennzeichnet, dass** der Spannhebel (40) um eine horizontale, sich in Fahrzeuglängsrichtung erstreckende Schwenkachse (41) schwenkbar ist.

5. Seitenabdeckung nach einem der vorangehenden Ansprüche, **dadurch gekennzeichnet, dass** sich der Spannhebel (40) aus zwei zueinander parallel geführten Teilhebeln (40A, 40B) zusammensetzt, die in Fahrzeuglängsrichtung vor bzw. hinter dem Rungengrundkörper (6) angeordnet sind.

6. Seitenabdeckung nach Anspruch 1, **dadurch gekennzeichnet, dass** der Kniehebel (31) mit seinem unteren Ende gegenüber dem Rungenhalter (20) abstützbar ist.

7. Seitenabdeckung nach Anspruch 6, **dadurch gekennzeichnet, dass** das untere Ende des Kniehebels (31) an dem Rungengrundkörper (6) längsgeführt ist.

8. Seitenabdeckung nach einem der Ansprüche 1 bis 7, **dadurch gekennzeichnet, dass** Kniehebel (31) und Spannhebel (40) bei verriegelter Runge parallel zueinander senkrecht stehen, wohingegen bei entriegelter Runge der Kniehebel (31) steiler steht, als der Spannhebel (40).

9. Seitenabdeckung nach einem der Ansprüche 1 bis 8, **gekennzeichnet durch** einen zweiten Kniehebel (32) der Hebelanordnung, der über ein erstes Schwenkgelenk (37) zu dem Rungengrundkörper (6) hin verschwenkbar ausgebildet ist, und über ein zweites Schwenkgelenk (38) mit dem ersten Kniehebel (31) gekoppelt ist.

10. Seitenabdeckung nach Anspruch 9, **dadurch gekennzeichnet, dass** der zweite Kniehebel (32) als eine flächige Druckplatte (33) gestaltet ist, welche bei verriegelter Runge (5) einen vertikalen Längsabschnitt des Rungengrundkörpers (6) auf dessen gesamter Breite nach außen hin abdeckt.

11. Seitenabdeckung nach einem der Ansprüche 1 bis 9, **dadurch gekennzeichnet, dass** der Spannhebel (40) als eine flächige Druckplatte gestaltet ist, welche bei verriegelter Runge (5) einen vertikalen Längsabschnitt des Rungengrundkörpers (6) auf dessen gesamter Breite nach außen hin abdeckt.

12. Seitenabdeckung nach Anspruch 10 oder 11, **dadurch gekennzeichnet, dass** an der Druckplatte (33) und / oder an einem der beiden Kniehebel (31, 32) ein von Hand greifbares Zugelement (50), z. B. eine Schlaufe, befestigt ist.

13. Seitenabdeckung nach Anspruch 12, **dadurch gekennzeichnet, dass** das Zugelement (50) durch eine Öffnung in der Seitenplane (10) hindurch bis auf die Außenseite der Seitenplane (10) reicht.

14. Seitenabdeckung nach einem der vorangehenden Ansprüche, **gekennzeichnet durch** einen in dem Rungengrundkörper (6) angeordneten Sicherungsmechanismus zum Sperren der Rungenverriegelung, wobei Bestandteil des Sicherungsmechanismus ein am unteren Ende des Rungengrundkörpers (6) beweglich gelagertes und dort von Hand greifbares Entsperrelement (55) ist.

## Claims

1. Side covering of a commercial vehicle structure, consisting of a side tarpaulin (10), which is suspended level with the roof construction (15) of the vehicle structure and can be pushed together in the longitudinal direction of the vehicle, and of at least one stanchion (5), which is arranged on the inner side of the side tarpaulin (10), is displaceable together therewith in the longitudinal direction of the vehicle and has a single- or multi-part main stanchion body (6) which is elongated vertically and, at its upper end, is provided with a roller apparatus (12) for guiding the stanchion (5) along the roof construction (15) and, at its lower end, can be locked against a stanchion holder (20) which is mounted on the vehicle, wherein part of the stanchion (5) is a clamping lever (40) which is formed so as to be pivotable towards the main stanchion body (6), **characterized in that** the lower end of the clamping lever (40)
- is guided longitudinally on a guide (47) on the main stanchion body (6)
- and is connected to the side tarpaulin (10) in the region of the lower edge (48) thereof,
**in that** the stanchion (5) is provided with a lever arrangement for releasably locking the stanchion to the stanchion holder (20), and **in that** part of the lever arrangement is a toggle lever (31) which can be supported in relation to the stanchion holder (20) and is formed so as to pivotable towards the main stanchion body (6) in order to lock the stanchion (5).

2. Side covering according to Claim 1, **characterized in that** there are connecting means (25) for the joint displaceability of stanchion and side tarpaulin, said connecting means connecting the side tarpaulin (10) in the horizontal direction to the stanchion (5) arranged on the inner side thereof.

3. Side covering according to Claim 2, **characterized in that** the connecting means (25) are straps or loops which are guided around the stanchion (5) and are fastened to the inner side of the tarpaulin (10) .

4. Side covering according to one of Claims 1 to 3, **characterized in that** the clamping lever (40) is pivotable about a horizontal pivot axis (41) extending in the longitudinal direction of the vehicle.

5. Side covering according to one of the preceding claims, **characterized in that** the clamping lever (40) is composed of two partial levers (40A, 40B) which are guided parallel to each other and are arranged in front of or behind the main stanchion body (6) in the longitudinal direction of the vehicle.

6. Side covering according to Claim 1, **characterized in that** the toggle lever (31) can be supported at its lower end in relation to the stanchion holder (20) .

7. Side covering according to Claim 6, **characterized in that** the lower end of the toggle lever (31) is guided longitudinally on the main stanchion body (6) .

8. Side covering according to one of Claims 1 to 7, **characterized in that**, when the stanchion is locked, the toggle lever (31) and the clamping lever (40) stand vertically parallel to each other, whereas, when the stanchion is unlocked, the toggle lever (31) stands more steeply than the clamping lever (40) .

9. Side covering according to one of Claims 1 to 8, **characterized by** a second toggle lever (32) of the lever arrangement, said toggle lever being formed so as to be pivotable towards the main stanchion body (6) via a first pivoting joint (37) and being coupled to the first toggle lever (31) via a second pivoting joint (38).

10. Side covering according to Claim 9, **characterized in that** the second toggle lever (32) is configured as a flat pressure plate (33) which, when the stanchion (5) is locked, covers a vertical longitudinal section of the main stanchion body (6) over its entire width towards the outside.

11. Side covering according to one of Claims 1 to 9, **characterized in that** the clamping lever (40) is configured as a flat pressure plate which, when the stanchion (5) is locked, covers a vertical longitudinal section of the main stanchion body (6) over its entire width towards the outside.

12. Side covering according to Claim 10 or 11, **characterized in that** a tension element (50), e.g. a loop, which can be grasped by hand is fastened to the pressure plate (33) and/or to one of the two toggle levers (31, 32).

13. Side covering according to Claim 12, **characterized in that** the tension element (50) reaches through an opening in the side tarpaulin (10) as far as the outer side of the side tarpaulin (10).

14. Side covering according to one of the preceding claims, **characterized by** a securing mechanism, which is arranged in the main stanchion body (6), for blocking the stanchion lock, wherein part of the securing mechanism is an unblocking element (55) which is mounted movably at the lower end of the main stanchion body (6) and can be grasped by hand there.

## Revendications

1. Recouvrement latéral d'un véhicule utilitaire, constitué d'une bâche latérale (10) suspendue à hauteur de la structure de toit (15) de la caisse de véhicule et pouvant être resserrée dans la direction longitudinale du véhicule et d'au moins une ridelle (5) disposée sur le côté intérieur de la bâche latérale (10) et déplaçable conjointement avec celle-ci dans la direction longitudinale du véhicule, laquelle ridelle comprend un corps de base de ridelle (6) allongé verticalement en une ou plusieurs parties, est dotée, à son extrémité supérieure, d'un appareil à rouleaux (12) pour le guidage de la ridelle (5) le long de la structure de toit (15), et peut être verrouillée, par son extrémité inférieure, contre un support de ridelle (20) solidaire du véhicule, un levier de tension (40) réalisé de manière pivotante vers le corps de base de ridelle (6) faisant partie de la ridelle (5), **caractérisé en ce que** l'extrémité inférieure du levier de serrage (40)
- est guidée longitudinalement au niveau d'un guide (47) sur le corps de base de ridelle (6)
- et est reliée à la bâche latérale (10) dans la région du bord inférieur (48),
**en ce que** la ridelle (5) est dotée d'un ensemble de leviers pour sa liaison libérable au support de ridelle (20), et **en ce qu'**un levier à genouillère (31) pouvant être supporté par rapport au support de ridelle (20) fait partie de l'ensemble de leviers, lequel levier à genouillère est réalisé de manière pivotante vers le corps de base de ridelle (6) pour le verrouillage de la ridelle (5).

2. Recouvrement latéral selon la revendication 1, **caractérisé en ce que** des moyens de liaison (25) sont prévus pour la mobilité commune de la ridelle et de la bâche latérale, lesquels moyens de liaison relient la bâche latérale (10) dans la direction horizontale à la ridelle (5) disposée sur son côté intérieur.

3. Recouvrement latéral selon la revendication 2, **caractérisé en ce que** les moyens de liaison (25) sont des sangles ou des boucles guidées autour de la ridelle (5), lesquelles sont fixées au côté intérieur de la bâche (10) .

4. Recouvrement latéral selon l'une des revendications 1 à 3, **caractérisé en ce que** le levier de tension (40) est pivotant autour d'un axe de pivotement (41) horizontal s'étendant dans la direction longitudinale du véhicule.

5. Recouvrement latéral selon l'une des revendications précédentes, **caractérisé en ce que** le levier de tension (40) est composé de deux leviers partiels (40A, 40B) guidés parallèlement l'un à l'autre, lesquels sont disposés devant ou derrière le corps de base de ridelle (6) dans la direction longitudinale du véhicule.

6. Recouvrement latéral selon la revendication 1, **caractérisé en ce que** le levier à genouillère (31) peut être supporté, par son extrémité inférieure, par rapport au support de ridelle (20).

7. Recouvrement latéral selon la revendication 6, **caractérisé en ce que** l'extrémité inférieure du levier à genouillère (31) est guidée longitudinalement au niveau du corps de base de ridelle (6).

8. Recouvrement latéral selon l'une des revendications 1 à 7, **caractérisé en ce que** le levier à genouillère (31) et le levier de tension (40) sont, en cas de ridelle verrouillée, situés verticalement parallèlement l'un à l'autre, tandis que le levier à genouillère (31) présente une pente plus raide que le levier de tension (40) en cas de ridelle déverrouillée.

9. Recouvrement latéral selon l'une des revendications 1 à 8, **caractérisé par** un deuxième levier à genouillère (32) de l'ensemble de leviers, lequel est réalisé de manière pivotante vers le corps de base de ridelle (6) par le biais d'une première articulation pivotante (37), et est accouplé au premier levier à genouillère (31) par le biais d'une deuxième articulation pivotante (38).

10. Recouvrement latéral selon la revendication 9, **caractérisé en ce que** le deuxième levier à genouillère (32) est configuré sous la forme d'une plaque de compression plane (33), laquelle recouvre vers l'extérieur une partie longitudinale verticale du corps de base de ridelle (6) sur toute sa largeur en cas de ridelle verrouillée (5).

11. Recouvrement latéral selon l'une des revendications 1 à 9, **caractérisé en ce que** le levier de tension (40) est configuré sous la forme d'une plaque de compression plane, laquelle recouvre vers l'extérieur une partie longitudinale verticale du corps de base de ridelle (6) sur toute sa largeur en cas de ridelle verrouillée (5).

12. Recouvrement latéral selon la revendication 10 ou 11, **caractérisé en ce qu'**un élément de traction (50) pouvant être saisi manuellement, par exemple une boucle, est fixé à la plaque de compression (33) et/ou à l'un des deux leviers à genouillère (31, 32).

13. Recouvrement latéral selon la revendication 12, **caractérisé en ce que** l'élément de traction (50) s'étend à travers une ouverture dans la bâche latérale (10) jusqu'au côté extérieur de la bâche latérale (10).

14. Recouvrement latéral selon l'une des revendications précédentes, **caractérisé par** un mécanisme de sécurité disposé dans le corps de base de ridelle (6) pour bloquer le verrouillage de ridelle, un élément de déblocage (55) monté mobile à l'extrémité inférieure du corps de base de ridelle (6) et pouvant y être saisi manuellement faisant partie du mécanisme de sécurité.
